# EUROPEAN PATENT APPLICATION

(11) **EP 3 026 902 A1**
(43) Date of publication of application: **01.06.2016**
(21) Application number: 14844896.2
(22) Date of filing: 16.09.2014
(51) Int. Cl.: H04N 7/015, H04N 5/44

(54) **BROADCASTING RECEPTION APPARATUS AND CONTROL METHOD THEREOF**

(30) Priority: 16.09.2013 US 201361878177 P
(71) Applicant: Samsung Electronics Co., Ltd, Gyeonggi-do 16677 (KR)
(72) Inventor: KIM, Mun-seok, Hwaseong-si Gyeonggi-do 445-788 (KR); NAM, Kyung-chul, Seoul 133-736 (KR)
(74) Representative: Appleyard Lees IP LLP
(86) International application number: PCT/KR2014/008604
(87) International publication number: WO 2015/037964

(57) **Abstract**

A broadcasting reception apparatus is disclosed. The broadcasting reception apparatus comprises: a reception unit which receives a broadcasting signal; an information acquisition unit which scans a broadcasting signal and acquires service information on the broadcasting signal; and a control unit which provides a predetermined type of service on the basis of the acquired service information, wherein the service information comprises service type information, information on a sub type that can be provided according to each service type, and detailed information specialized for the service type.

## Description

### [Technical Field]

Apparatuses and methods consistent with the present disclosure relate to a broadcasting reception apparatus and a control method thereof, and more particularly, to a broadcasting reception apparatus and a control method thereof capable of corresponding to newly added service types using service-only description information.

### [Background Art]

With the development of various image related technologies, an ultra high definition image (hereinafter, UHD) supporting ultra high definition (UHD) resolution beyond the currently generally provided HD resolution has emerged. Standardization of the broadcasting reception apparatus supporting a new type of services like an UHD service is actively in progress in recent years.

There are a terrestrial virtual channel table (TVCT), a cable virtual channel table (CVCT), and so on in a program and system information protocol (PSIP) in standards for current digital broadcasting. Various types of channel information corresponding to one physical channel and a virtual channel list included in the channel information are shown using the PSIP.

In the case of the UHD service, only one service type is present. However, only the existing standards have trouble supporting all the existing services such as a new type of services and HD services emerging with the development of image related technologies.

Therefore, even though a new type of service is additionally extended in signaling, a scheme for transmitting new service information without a separately specialized descriptor later has been requested.

### [Disclosure]

### [Technical Problem]

The present disclosure provides a broadcasting reception apparatus and a control method thereof capable of providing newly additionally extended services without a separately specialized descriptor later by a common method.

### [Technical Solution]

According to an aspect of the present disclosure, a broadcasting reception apparatus includes a receiver which receives a broadcasting signal; an information acquirer which scans a broadcasting signal and acquires service information on the broadcasting signal; and a controller which provides a predetermined type of service on the basis of the acquired service information, wherein the service information includes service type information, information on a sub type that may be provided according to each service type, and detailed information specialized for the service type.

The controller may determine a service type on the basis of the service type information and extract detailed information specialized for the corresponding service type according to the determined service type to provide the corresponding service.

The service type information may indicate an ultra high definition (UHD) television service.

The information on the sub type may be information indicating whether HD compatibility is made.

The information on the sub type may indicate at least one of a compatible type between 4K UHD and the HD, a non-compatible type between the 4K UHD and the HD, a compatible type between 8K UHD and the HD, and a non-compatible type between the 8K UHD and the HD.

The detailed information specialized for the service type may include at least one of a codec profile value, a codec level value, and whether the UHD service is continued.

If it is indicated that the UHD service is discontinued, the controller may add a channel for providing services that are additionally supported.

The service information may be service description information that is included in at least one of a terrestrial virtual channel table (TVCT), a cable virtual channel table (CVCT), a short-form virtual channel table (S-VCT), and a long-form virtual channel table (L-VCT).

The service information may include at least one of specific information (SI) type information and program and system information protocol (PSIP) type information.

According to another aspect of the present disclosure, a control method of a broadcasting reception apparatus includes receiving a broadcasting signal; scanning the received broadcasting signal and acquiring service information on the broadcasting signal; and providing a predetermined type of service on the basis of the acquired service information, wherein the service information includes service type information, information on a sub type that may be provided according to each service type, and detailed information specialized for the service type.

In the providing of the service, a service type may be determined on the basis of the service type information and detailed information specialized for the corresponding service type may be extracted according to the determined service type to provide the corresponding service.

The service type information may indicate an ultra high definition (UHD) television service.

The information on the sub type may be information indicating whether HD compatibility is made.

The information on the sub type may indicate at least one of a compatible type between 4K UHD and the HD, a non-compatible type between the 4K UHD and the HD, a compatible type between 8K UHD and the HD, and a non-compatible type between the 8K UHD and the HD.

The detailed information specialized for the service type may include at least one of a codec profile value, a codec level value, and whether the UHD service is continued.

In the providing of the service, if it is indicated that the UHD service is discontinued, a channel for providing a service that is additionally supported may be added.

The service information may be service description information that is included in at least one of a terrestrial virtual channel table (TVCT), a cable virtual channel table (CVCT), a short-form virtual channel table (S-VCT), and a long-form virtual channel table (L-VCT).

The service information may include at least one of service information (SI) type information and program and system information protocol (PSIP) type information.

### [Advantageous Effects]

As set forth above, according to various exemplary embodiments of the present disclosure, it is possible to provide the new service information without the separately specialized descriptor by providing the common service signaling method even though the new services additionally emerge later. Therefore, the user convenience may be improved.

### [Description of Drawings]

The above and/or other aspects of the present invention will be more apparent by describing certain exemplary embodiments of the present invention with reference to the accompanying drawings, in which:
FIG. 1 is a block diagram schematically illustrating a configuration of a broadcasting reception apparatus according to an exemplary embodiment of the present disclosure;
FIG. 2 is a block diagram illustrating in detail a configuration of the broadcasting reception apparatus according to the exemplary embodiment of the present disclosure;
FIG. 3 is a diagram for explaining a bit stream syntax for a TVCT according to an exemplary embodiment of the present disclosure;
FIG. 4 is a diagram for explaining newly added service description information according to an exemplary embodiment of the present disclosure;
FIG. 5 is a diagram for explaining an information field on a sub type that may be provided according to each service type according to an exemplary embodiment of the present disclosure;
FIG. 6 is a diagram for explaining a detailed information field specialized for a service type according to an exemplary embodiment of the present disclosure; and
FIG. 7 is a flow chart for explaining a control method of a broadcasting reception apparatus according to an exemplary embodiment of the present disclosure.

### [Best Mode]

Hereinafter, exemplary embodiments of the present disclosure will be described in detail with reference to the accompanying drawings.

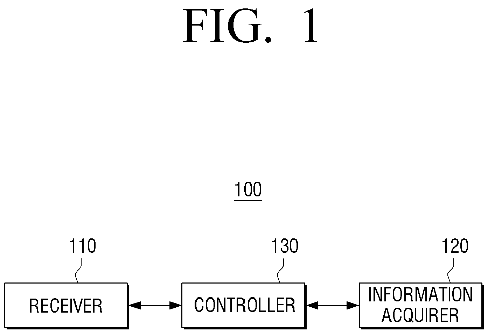

FIG. 1 is a block diagram schematically illustrating a configuration of a broadcasting reception apparatus according to an exemplary embodiment of the present disclosure.

Referring to FIG. 1, a broadcasting reception apparatus 100 according to an exemplary embodiment of the present disclosure includes a receiver 110, an information acquirer 120, and a controller 130.

The receiver 110 is configured to receive broadcasting in a wired manner or a wireless manner from a broadcasting station or a satellite and demodulate the received broadcasting. In detail, the receiver 110 may receive broadcasting signals of plural channels transmitted from the broadcasting station or the satellite. The receiver 110 may be configured to include a tuner tuning the broadcasting signals and a demodulator demodulating the tuned broadcasting signals.

Meanwhile, the receiver 110 may receive the broadcasting signal of the channel selected by a user among the plurality of broadcasting signals on the basis of a control of the controller 130. Here, the plurality of broadcasting signals are digital broadcasting signals and may be transmitted from a digital broadcasting transmitter. A general digital broadcasting signal may be generated by the following processing.

A video signal and an audio signal forming a broadcasting program each may be encoded and compressed to be converted into a video elementary stream and an audio elementary stream (referred to as ES) that are a basis of digital data. Further, the ES may be converted into a transport stream (referred to as TS) in a type that may be multiplexed and transmitted by a packetizing and multiplexing process. Further, the TS may be subjected to transmission processes such as channel coding and modulation to be a broadcasting signal and then transmit the broadcasting signal to a receiver.

Meanwhile, the receiver 110 may receive service information on corresponding broadcasting services and related contents and system information on transmission to provide digital broadcasting services. In detail, the receiver 110 may tune a channel through which the corresponding broadcasting services and the related contents are transmitted by using the system and service information provided through a broadcasting channel or a communication channel and acquire information required to receive contents.

Broadcasting media such as terrestrial and cable TVs define a signaling scheme suitable for each broadcasting medium transmission environment as a standard. Here, the digital cable broadcasting system transmits the broadcasting service and the system information using the PSIP and SI standards.

The receiver 110 may receive the service and system information periodically transmitted from PSIP and SI servers located in a provider headend and acquire information required to receive broadcasting contents using the service and system information. The receiver 110 may tune a broadcasting contents receiving channel using the service and system information that is periodically signaled.

The information acquirer 120 is configured to scan the broadcasting signal to acquire the service information on the broadcasting signal. In detail, the information acquirer 120 scans the plurality of broadcasting signals at a predetermined period to acquire the service information (SI) of the plurality of broadcasting signals.

Here, the service information means information required for demultiplexing the multiplexed TS and information on contents and kinds for various programs that are provided from the broadcasting service. That is, the service information may include broadcasting channel information, broadcasting signal coding information, electronic program guide (EPG) information, and so on.

The service information includes PSIP of the advanced television system committee (ATSC) A / 65 that includes all program specific information (PSI) of the MPEG-2 system (ISO / IEC 13818-1 Sections) for classifying programs, network information and program guide information transferred to a ground, a cable, a satellite, and so on.

Meanwhile, in the case of Europe, instead of the PSIP, digital video broadcast-service information (DVB-SI) based on a DVB standard is defined.

The PSI has information that may demultiplex a specific stream in the TS multiplexed by the receiver and decode the demultiplexed stream. The PSI is configured to include a program association table (PAT), a conditional access table (CAT), a program map table (PMT), and a network information table (NIT).

Among those, the PAT has a packet identifier (PID) of the PMT corresponding to various kinds of broadcasting signals provided from the transmitter. Therefore, the PAT serves to allocate a TS packet to each of the broadcasting signals, that is, programs. Further, the PMT has the PID of the TS packet to which the broadcasting signal is transferred along with a kind of each broadcasting signal, and thus the PMT may be informed on which packet video, audio, and data each are carried.

Meanwhile, the PSIP has guide information on each program and channel information. The PSIP is transmitted in a table form and is configured to include a system time table (STT) informing date and time, a rating region table (RRT) for providing level information on multiple geographic regions (MGRs), a master guide table (MGT) for providing versions, sizes, and program identifiers (PIDs) of all other tables, a virtual channel table (VCT) for providing attributes for all virtual channels within a transmission stream, an event information table (EIT) for providing event information in a virtual channel, and an extended text table (ETT) for providing a detailed description of the virtual channel and the event. A packet ID recognized as the PSIP from the TS of the MPEG-2 is 0xFFB and may be decoded to obtain the VCT table. Table_id may be checked in the corresponding packet to find out that the corresponding table is the MGT, the STT, the RRT or the VCT. Once the VCT is extracted and decoded, the PIDs of the audio and video streams of the broadcasting signal may be obtained, and as a result the individual broadcasting program may be demultiplexed. Therefore, the reception may be made without the PAT and the PMT of the PSI but the PSI information may be simultaneously transmitted to be compatible with the MPEG-2 in the ATSC standard.

The PSI and the PSIP are described in the ISO / IEC 13818-1 Section and the ATSC A / 65 standard, and therefore the description thereof will be omitted.

The information acquirer 120 may filter a data signal from the scanned broadcasting signal to acquire service information. The acquired service information may be transferred to the controller 130.

The controller 130 may provide a predetermined type of service based on the acquired service information. Here, the service information may include information on the service type. Here, as the service type, there may be a PSIP / PSI type, a PSI type, and a PSIP type.

Further, the service information may include information on the sub type that may be provided according to each service type. For example, if the service type is ultra high definition (UHD) television, the information on the sub type that may be provided from the UHD service type may be information indicating whether high definition (HD) compatibility is made. In detail, the information on the sub type may indicate whether 4K UHD and the HD are compatible with each other, whether 8K UHD and the HD are compatible with each other, and so on.

Further, the service information may include detailed information specialized for the service type. For example, if the service type is the UHD, the detailed information specialized for the UHD may include a codec profile value, a codec level value, whether the UHD service is continued, and so on.

Whether the UHD service is continued means whether to service only the UHD broadcasting through the specific channel or whether to service other types of broadcasting such as the HD broadcasting together. Therefore, the controller 130 may determine whether the channel for other types of broadcasting is added to a channel list. For example, if it is indicated that the UHD service is discontinued, the controller 130 may add a channel for providing services that may be additionally supported.

Meanwhile, the above-mentioned service information may be service description information that is included in a terrestrial virtual channel table (TVCT), a cable virtual channel table (CVCT), a short-form virtual channel table (S-VCT), a long-form virtual channel table (L-VCT), and so on.

The TVCT is a table including broadcasting information on several channels transmitted from terrestrial broadcasting, which are defined in a PSIP standard. The TVCT transmits a channel name and a kind of broadcasting programs, a channel transfer modulation scheme, a frequency, and source_id information corresponding to an individual broadcasting program and is used to acquire program guide information by referring to a program guide table (EIT) using the source_id. The CVCT is a table including the broadcasting information transmitted to the cable, which is defined in the PSIP standard and has approximately the same structure as the TVCT.

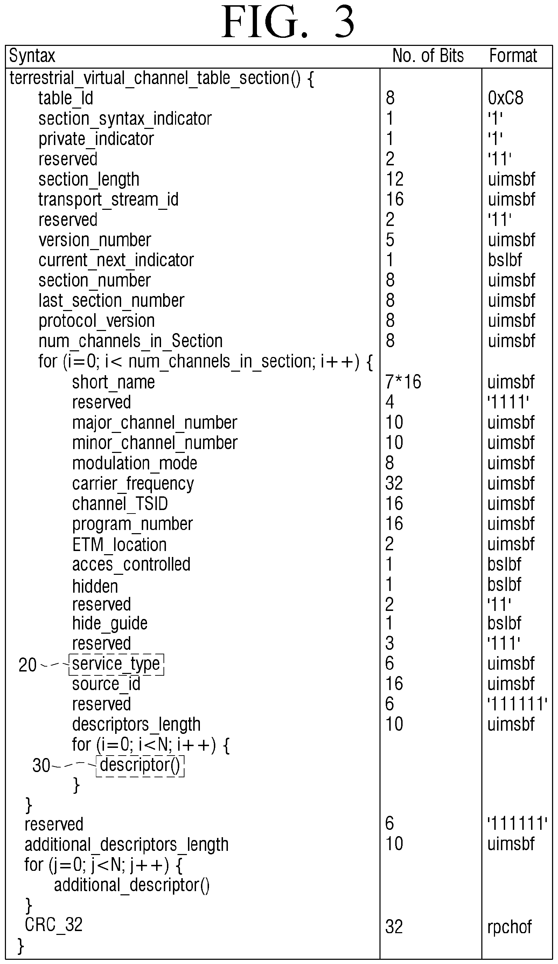

The above-mentioned service information may be, for example, service description information in which is standardized and included in a descriptor() field among the TVCT. That is, new standardized service description information (general service information descriptor) including service information that may provide additional information according to the service type may be additionally configured in a service location descriptor of the VCT of the existing ATSC standard. Therefore, the information on the corresponding channel service may be provided in the channel description tables such as the TVCT, the CVCT, the S-VCT, the L-VCT, and so on. The service description information describing the above-mentioned service information has general extendibility and therefore it is possible to divide even newly added services into a sub type or provide the detailed information. By using this, in an UHD standard related signaling method that is currently being discussed, a common service signaling method may be standardized. The detailed contents of the service description information will be described in detail with reference to FIGS. 3 to 6.

Meanwhile, the controller 130 may collect the information on the served broadcasting programs to be configured in the electronic program guide (EPG) form, and so on and then may provide the collected information to a user. The EPG means a kind of broadcasting program schedule displayed on a screen of a digital TV through data broadcasting using an empty frequency band or an extra channel and the EPG includes information on a program channel, a broadcasting time, a title, a category, and so on. By this, a viewer may operate the EPG with a remote controller to simply understand at which broadcasting station any broadcasting program is televised on that day, for example, since 1 week, and so on.

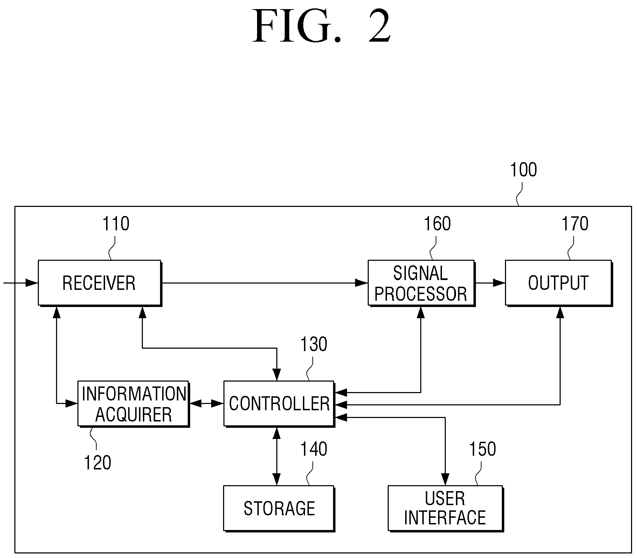

FIG. 2 is a block diagram illustrating in detail a configuration of the broadcasting reception apparatus according to the exemplary embodiment of the present disclosure.

Referring to FIG. 2, the broadcasting reception apparatus 100 includes the receiver 110, the information acquirer 120, the controller 130, a storage 140, a user interface 150, a signal processor 160, and an output 170. Hereinafter, the description of overlapping portions with the description in FIG. 1 will be omitted.

The storage 140 may store the service information on the acquired broadcasting signal. Further, the storage 140 may store various kinds of programs and data such as a basic input output system (BIOS), an operating system, and applications.

The user interface 150 may receive a control command transmitted from an input means such as a physical button for controlling the broadcasting receiving apparatus 100 and a wireless input means such as a remote controller and transfer the received control command to the controller 130.

The signal processor 160 receives the broadcasting signal of the channel selected by the controller 130 from the receiver 110 and performs signal processing on the broadcasting signal to output the broadcasting signal. In detail, the signal processor 160 may use the service information to demultiplex the TS of the broadcasting signal to be output and decode the demultiplexed video and audition streams.

Meanwhile, the signal processor 160 may include a demultiplexer (not illustrated), a video decoder (not illustrated), and an audio decoder (not illustrated). The demultiplexer may demultiplex the TS of the broadcasting program to be played using the acquired service information and separate a video ES, an audio ES, and data. In detail, the controller 130 may use the program guide information (EPG) of the stored service information to control the operation of the demultiplexer on the basis of the broadcasting channel selected by the user interface 150.

Each of the audio decoder and the video decoder may decode the audio ES and the video ES and transfer them to the output 170. Further, the demultiplexer may extract a data stream and transfer the extracted data stream to the output 170.

The output 170 may include a speaker (not illustrated) and a display (not illustrated). The speaker may output the decoded audio signal and the display may display the decoded video signal.

FIGS. 3 to 7 are diagrams for explaining one example in which the service description information according to the exemplary embodiment of the present disclosure is applied.

As one example of the present disclosure, the case in which the service description information according to the exemplary embodiment of the present disclosure is applied to the TVCT will be described with reference to FIGS. 3 to 7. However, the service description information may also be applied to the CVCT, the S-VCT, the L-VCT, and so on.

First, a bit stream syntax for the TVCT will be briefly described with reference to FIG. 3.

Referring to FIG. 3, a data section of the TVCT of the broadcasting receiving apparatus 100 according to the ATSC standard is configured to include newly standardized service description information including the service information that may provide additional information to a service location descriptor field (descriptor ()) according to the service type. That is, the service description information may be described in the descriptor form in the TVCT within the PSIP.

FIG. 3 illustrates the syntax configuration of the TVCT including the service description information according to the exemplary embodiment of the present disclosure. The TVCT may transfer information on the virtual channel and have the descriptor for expansion thereof and the service description information according to the exemplary embodiment of the present disclosure may configure one of the descriptors of the TVCT. In detail, a plurality of tables having a specific goal each are defined in the PSIP and a plurality of tables each have a section structure similar to tables defined in the program specific information (PSI) of the MPEG. That is, each table may have a section structure for transmission and may consist of one or a plurality of sections according to the kind.

To be selectively received by the receiver 10, each section is divided into a header including basic information on a table and a section, a body including actual data of the table, and a trailer including information for error correction. In the following description, in describing the TVCT section, a header from a 'table_id' field to a 'protocol_version' field, a body from a 'num_channel_in_section' field to a 'additional_descriptors_length' field, and a trailer consisting of a 'CRC_32' field will be described separately.

First, the 'table_id' field in the header indicates a table type within the PSIP and in the case of the TVCT according to the MPEG, ATSC, ARIB, SCTE, or DVB standard, is defined to have a 8 bit field value of "0xC8". The 'section_syntax_indicator' field indicates a format according to the table section. For example, according to the definition of the ISO/IEC 13818-1, Table 2-30, in the case of the ATSC PSIP table, a value is defined as "1". A 'private_indicator' field has been used to previously indicate whether the table in the ISO/IEC 13818 ends in CRC-32 of 4 bits but the definition thereof is deleted from the MPEG at present. In the ATSC standard, the 'private_indicator' field is a 1 bit field defined to designate "1" in most of the tables.

A 'section_length' field indicates the number of bytes that remain in the section up to the end of the table section after the field. A 'transport_stream_id' field indicates a TS identifier of the transport stream. A 'version_number' field informs a version number of the table section and a 'current_next_indicator' field informs that the table section follows a current version or a next version. A 'section_number' field indicates a serial number of table sections and a 'last_section_number' field indicates a serial number of previous table sections. A 'protocol_version' field indicates a protocol version.

In the body portion, a 'num_channels_in_section' field indicates the number of virtual channels defined to follow the table section. A portion from a 'short_name' filed within a for loop to a descriptor () display field is repeatedly described for each virtual channel.

The 'short_name' field is allowed to give a short name consisting of a Unicode for the virtual channel. A 'major_channel_number' field and a 'minor_channel_number' field are combined to indicate a virtual channel number. A 'modulation_mode' field indicates a modulation mode used to transmit an individual channel and a 'carrier_frequency' field indicates a carrier frequency. A 'channel_TSID' field indicates a transport stream ID of a channel on which a program referenced by the virtual channel is carried. A 'program_number' field is allowed to uniquely identify each program service that is present in the transport stream.

A 'ETM_location' field indicates whether there is an extended event table. A 'access_controlled' field indicates whether an access control to the corresponding virtual channel is performed. A 'hidden' field indicates whether to access the corresponding channel by directly inputting the virtual channel number or whether not to display the channel upon the input or surfing of the channel number by hiding the channel. A 'service_type' field 20 indicates a service type set in the virtual channel. In this field, newly added service description information each may be differently analyzed on the basis of the set service type. Therefore, the sub type information may be provided in detail on the basis of the service type and information specialized for the information or the service type required only for a specific service may be provided. For example, when the service type set in the 'service_type' field 20 is the UHD, the service description information may provide the information on the sub type indicating whether the HD compatibility for the UHD service is made, a codec profile value specialized for the UHD service type, a codec level value, the information on whether the UHD service is continued, and so on.

The 'source_id' field is to indicate whether the virtual channels, an event information table writing contents, and a link between the extended event text tables are permitted and may indicate a programming source associated with the virtual channel.

The 'descriptors_length' field indicates the whole byte length of the descriptor field thereunder and the descriptor () field 30 is a location at which an individual descriptor is described. If necessary, an addtional_descriptor_length field and an additional_descriptor() field may be used to include other descriptor loops.

At the trailer portion, a 'CRC_32' field indicates CRC data calculated by a polynomial operation for each byte from the 'table id' field to the last byte of the table, thereby detecting an error in the receiver.

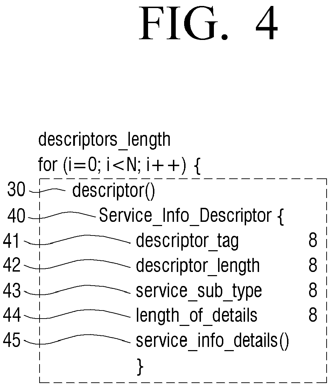

According to the exemplary embodiment of the present disclosure, the service description information may be described in the 'descriptor ()' field 30 in the TVCT table as described above to be defined. Here, the service description information may consist of a "service_sub_type' field including the information on the sub type that may be provided according to each service type and a 'service_sub_type' field including detailed information specialized for the set service type. The detailed content of the service description information will be described with reference to FIGS. 4 to 6.

FIG. 4 is a diagram for explaining a syntax structure of newly added service description information according to an exemplary embodiment of the present disclosure. As illustrated in FIG. 4, the 'descriptor()' field 30 includes a 'Service_info_Descriptor' field 40 corresponding to the service description information. The 'Service_Info_Descriptor' field 40 includes a 'descriptor_tag' field 41, a 'descriptor_length' field 42, and a 'length_of_details' field 44 and may further include a 'service_sub_type' field 43 and a 'service_info_details()' field 45.

The 'descriptor_tag' field 41 is an identifier for discrimination from other descriptors and has a field of 8 bits. The 'descriptor_length' field 42 is a length of the descriptor, that is, the number of bytes of a data portion and the 'descriptor_length' field 42 consists of 8 bits. The 'length_of_details' field 45 indicates a length of the 'service_info_details()' field 45 including the detailed information specialized for the service type and the 'length-of details' field 44 also consists of 8 bits.

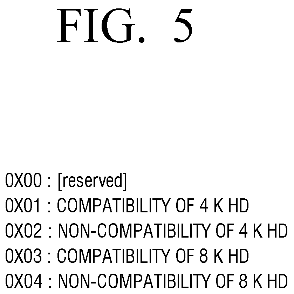

The 'service_sub_type' field 43 will be described with reference to FIG. 5.

FIG. 5 is a diagram for explaining an information field on a sub type that may be provided according to each service type according to an exemplary embodiment of the present disclosure. Referring to FIG. 5, the 'service_sub_type' field includes the information on the sub type that may be provided according to each service type. For example, if the set service type is the UHD, the information on the sub type that may be provided from the UHD service type may be information indicating whether high definition (HD) compatibility is made.

In detail, the information on the sub type may indicate compatibility between 4K UHD and the HD, non-compatibility between the 4K UHD and the HD, compatibility between 8K UHD and the HD, non-compatibility between the 8K UHD and the HD, and so on. Generally, the 4K UHD means the UHD having a broadcasting resolution of 3840 × 2160 and the 8K UHD means the UHD having a broadcasting resolution of 7680 × 4320. As the introduction and spread of the broadcasting service of UHDTV are expected to take a lot of time, the existing HD broadcasting and new UHDTV broadcasting need to coexist. Therefore, the information indicating whether the UHD and the HD are compatible with each other to provide the UHD broadcasting service having the corresponding resolution and the HD broadcasting service is required and the information on the sub type may be included in the service information.

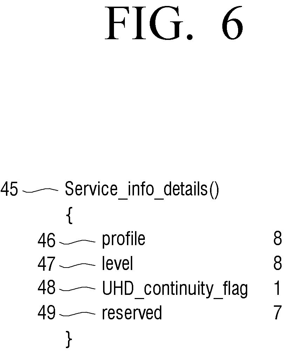

The 'service_info_details()' field 45 will be described with reference to FIG. 6.

FIG. 6 is a diagram for explaining a detailed information field specialized for a service type according to an exemplary embodiment of the present disclosure. Referring to FIG. 6, the 'service_info_details()' field 45 includes the detailed information specialized for the service type. For example, if the service type is the UHD, the detailed information specialized for the UHD may include a codec profile value, a codec level value, whether the UHD service is continued, and so on.

A 'profile' field 46 may mean a profile value of a high efficiency video coding (HEVC) codec. The HEVC is a codec capable of coping with the UHD environment of 4K or 8K and has currently adopted a high efficiency video compression technology for transmission of the UHD image. The codec profile value of the HEVC is restrictions set to use only specific technologies meeting a use area and as the codec profile value, there are a main profile, a main profile (main) 10 for 10 bits defined to meet the main profile, a still picture coding profile (main still picture), and so on.

A 'level' field 47 may mean a level value of the HEVC codec. The codec level value of the HEVC defines specifications required for decoding. For example, a 1 level means a specification that may decode QCIF (176 × 144) at about 15 frames per second and since the higher the level, the higher the specification, the 1 level is defined to play a 8K image at 120 frames per second at 6.2 that is the highest level.

A 'UHD_continuity_flag' field 48 means whether the UHD service is continued. In detail, the 'UHD_continuity_flag' field includes information on whether to service only the UHD broadcasting in a specific channel or different types of broadcasting such as the HD broadcasting together. The 'UHD_continuity_flag' field may have a '1' value when the UHD service is continued and may have a '0' value when the UHD service is discontinued but is changed to other services. It is possible to add a channel for providing different types of services that may be additionally supported, according to whether the UHD service is continued. For example, when the broadcasting program of the UHD type ends in the specific channel, the broadcasting program of the HD type may start. In this case, the 'UHD_continuity_flag' field value needs to have '0' and the channel for supporting the broadcasting program of the HD type needs to be added.

A 'reserved' field 49 means a reserved filed for additionally using required information later.

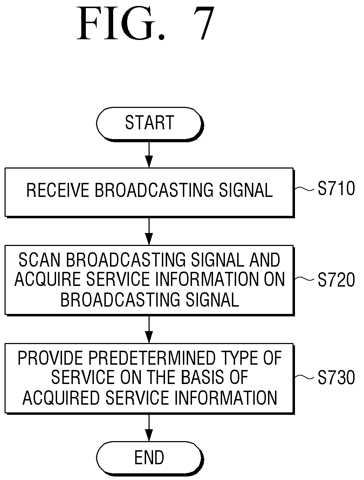

FIG. 7 is a flow chart for explaining a control method of a broadcasting reception apparatus according to an exemplary embodiment of the present disclosure. Here, the service type of the broadcasting signal will be described by being limited to the UHD service.

First, the broadcasting signal is received (S710). Next, the received broadcasting signal is scanned to acquire the service information of the broadcasting signal (S720). In detail, the service information on the corresponding broadcasting service and the related contents and the system information on the transmission may be received to provide the digital broadcasting service while receiving the broadcasting signals of the plural channels transmitted from the broadcasting station or the satellite. Here, the service information may include the service type information, the information on the sub type that may be provided according to each service type, the detailed information specialized for the service type, and so on. The service information is the service description information and may be received, being included in the TVCT, the CVCT, the S-VCT, the L-VCT, and so on. Next, the 'service_info_details' field specialized for the service type may be extracted according to the set service type to acquire the detailed information such as the codec profile value, the codec level value, and so on. Next, the predetermined type of service is provided on the basis of the acquired service information (S730). In detail, it is possible to configure the channel on the basis of whether to support the UHD service and the service of the sub type compatible with the UHD service and using the detailed information specialized for the acquired UHD service. For example, if the UHD service and the sub type service compatible with the UHD service are supported, the channel may be added and if not supported, the channel is not added, and as a result, it may be determined whether the channel is added. Further, for example, when the 'UHD_continuity_flag' field value is `0', a channel that may provide only services that may be additionally supported may be added.

As set forth above, according to various exemplary embodiments of the present disclosure, it is possible to provide the new service information without the separately specialized descriptor by providing the common service signaling method even though the new services additionally emerge later.

Meanwhile, the fact that the service description information is described in the TVCT is described with reference to FIGS. 3 to 7 according to the exemplary embodiment of the present disclosure, but the present disclosure is not limited thereto and therefore the service description information may also be described in the CVCT, the S-VCT, and the L-VCT to meet thereto.

Further, the present disclosure described exemplary embodiments in which the service description information is additionally configured according to the ATSC scheme adopted as national standard of digital TV broadcasting in Korea in addition to North America. However, the present disclosure is not necessarily limited thereto and the service description information that may be differently analyzed according to the service type of the present disclosure may be modified on the basis of the table defined in DVB-T2 that is national standard of digital TV broadcasting in Europe to be practiced even in the DVB-T2.

As described above, the control method of a broadcasting reception apparatus according to various exemplary embodiments of the present disclosure may be implemented as programs and thus stored in various recording media. That is, computer programs that may be processed by various kinds of processors and may execute the control method of various kinds of broadcasting receiving apparatuses described above may also be used as the state in which the computer programs are stored in the recording medium.

For example, there may be provided a non-transitory computer readable medium in which programs to execute receiving a broadcasting signal; scanning the received broadcasting signal and acquiring service information on the broadcasting signal; and providing a predetermined type of service on the basis of the acquired service information, in which the service information includes service type information, information on a sub type that may be provided according to each service type, and detailed information specialized for the service type are stored.

The non-transitory computer readable medium is not a medium that stores data therein for a while, such as a register, a cache, and a memory, but means a medium that semi-permanently stores data therein and is readable by a device. In detail, various applications or programs described above may be stored and provided in the non-transitory computer readable medium such as a CD, DVD, a hard disk, a Blu-ray disk, a USB, a memory card, an ROM, and so on.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims. Accordingly, such modifications, additions and substitutions should also be understood to fall within the scope of the present disclosure.

## Claims

1. A broadcasting reception apparatus, comprising:
a receiver which receives a broadcasting signal; an information acquirer which scans the broadcasting signal and acquires service information on the broadcasting signal; and a controller which provides a predetermined type of service on the basis of the acquired service information,
wherein the service information includes service type information, information on a sub type that is provided according to each service type, and detailed information specialized for the service type.

2. The broadcasting reception apparatus as claimed in claim 1, wherein the controller determines a service type on the basis of the service type information and extracts detailed information specialized for the corresponding service type according to the determined service type to provide the corresponding service.

3. The broadcasting reception apparatus as claimed in claim 1, wherein the service type information indicates an ultra high definition (UHD) television service.

4. The broadcasting reception apparatus as claimed in claim 3, wherein the information on the sub type is information indicating whether HD compatibility is made.

5. The broadcasting reception apparatus as claimed in claim 4, wherein the information on the sub type indicates at least one of a compatible type between 4K UHD and the HD, a non-compatible type between the 4K UHD and the HD, a compatible type between 8K UHD and the HD, and a non-compatible type between the 8K UHD and the HD.

6. The broadcasting reception apparatus as claimed in claim 3, wherein the detailed information specialized for the service type includes at least one of a codec profile value, a codec level value, and whether an UHD service is continued.

7. The broadcasting reception apparatus as claimed in claim 6, wherein if it is indicated that the UHD service is discontinued, the controller adds a channel for providing services that are additionally supported.

8. The broadcasting reception apparatus as claimed in claim 1, wherein the service information is service description information that is included in at least one of a terrestrial virtual channel table (TVCT), a cable virtual channel table (CVCT), a short-form virtual channel table (S-VCT), and a long-form virtual channel table (L-VCT).

9. The broadcasting reception apparatus as claimed in claim 1, wherein the service information includes at least one of program specific information (PSI) type information and program and system information protocol (PSIP) type information.

10. A control method of a broadcasting reception apparatus, comprising:
receiving a broadcasting signal;
scanning the received broadcasting signal and acquiring service information on the broadcasting signal; and providing a predetermined type of service on the basis of the acquired service information,
wherein the service information includes service type information, information on a sub type that is provided according to each service type, and detailed information specialized for the service type.

11. The control method as claimed in claim 10, wherein in the providing of the service, a service type is determined on the basis of the service type information and detailed information specialized for the corresponding service type is extracted according to the determined service type to provide the corresponding service.

12. The control method as claimed in claim 10, wherein the service type information indicates an ultra high definition (UHD) television service.

13. The control method as claimed in claim 12, wherein the information on the sub type is information indicating whether HD compatibility is made.

14. The control method as claimed in claim 13, wherein the information on the sub type indicates at least one of a compatible type between 4K UHD and the HD, a non-compatible type between the 4K UHD and the HD, a compatible type between 8K UHD and the HD, and a non-compatible type between the 8K UHD and the HD.

15. The control method as claimed in claim 12, wherein the detailed information specialized for the service type includes at least one of a codec profile value, a codec level value, and whether an UHD service is continued.
